# EUROPÄISCHE PATENTANMELDUNG

(11) **EP 1 621 380 A2**
(43) Veröffentlichungstag der Anmeldung: **01.02.2006**
(21) Anmeldenummer: 05014625.7
(22) Anmeldetag: 06.07.2005
(51) Int. Cl.: B60J 1/20

(54) **Gekrümmtes Fensterrollo mit innen liegendem Federwiderlager**

(30) Priorität: 29.07.2004 DE 102004036948
(71) Anmelder: BOS GmbH & Co. KG, 73760 Ostfildern (DE)
(72) Erfinder: Hansen, Melf, 75053 Gondelsheim (DE); Walter, Herbert, 73061 Ebersbach (DE)
(74) Vertreter: Rüger, Barthelt & Abel Patentanwälte

(57) **Zusammenfassung**

Bei einem Rollo mit gekrümmter Wickelwelle wird ein Federmotor verwendet, bei dem ein Federwiderlager innerhalb und an der Achse festgelegt ist, auf der die einzelnen Segmente der Wickelwelle drehbar gelagert sind. Dadurch wird eine Montageerleichterung geschaffen und die Feder wird in die Lage versetzt, sich an der Wand der Achse anzulegen, um Klappergeräusche zu vermeiden.

## Beschreibung

Bei modernen Karosserien geht die Tendenz weg von flach gekrümmten Heckscheiben in Richtung auf Heckscheiben mit starker Krümmung gegenüber der Hochachse. Solche Heckfenster lassen sich mit Fensterrollos, die eine gerade Wickelwelle aufweisen, nur schlecht abschatten. Das gerade Fensterrollo liegt sozusagen als Sehne vor der stark gekrümmten Heckscheibe und hat dementsprechend in der Mitte einen großen Abstand.

Abhilfe würde auch kein entsprechend gekrümmter Auszugsschlitz bringen. Der gekrümmte Auszugsschlitz würde bestenfalls zu unterschiedlichen Weglängen der einzelnen Längsabschnitte der Rollobahn zwischen Schlitz und Wickelwelle führen. Die Folge wäre ein unerwünschter Faltenwurf und schlaffe Bereiche, die lose durchhängen.

Das Bestreben geht deswegen dahin, auch gekrümmte Wickewellen zu schaffen, wie dies beispielsweise die DE 103 38 900 A1 zeigt.

Bei der bekannten Konstruktion besteht die eigentliche Wickelwelle, die mit der Rollobahn verbunden ist, aus einer Anzahl von geraden Wellenabschnitten, die drehfest miteinander gekuppelt sind. Die Wellenabschnitte sitzen gemeinsam drehbar auf einer gekrümmten Achse. Die Achse ist an einem Ende eingespannt, um sie hier in Umfangsrichtung und in axialer Richtung zu verankern. Das andere Ende ist mittels einer auf der Achse drehbar gelagerten Kappe unterstützt, wobei durch die Kappe hindurch eine Federstange führt, die außerhalb der Achse ebenfalls starr festgelegt ist. Die Federstange trägt an ihrem in der Achse liegenden Ende das starre Federwiderlager, während das äußere Federwiderlager an der Kappe verankert ist.

Um die Rollobahn auf der Wickelwelle aufzuwickeln, werden ca. 10 bis 15 Umdrehungen benötigt. Damit sich durch die 10 bis 15 Umdrehungen der Wickewelle die Vorspannung der Feder nicht all zu sehr ändert, muss eine vergleichsweise sehr lange Feder verwendet werden, die entsprechend vorgespannt ist. Durch die Verwendung der langen Feder kommt eine flache Federkennlinie zustande, wodurch ein Ausschnitt von 10 bis 15 Umdrehungen nicht dazu führt, dass an irgend einem Bewegungsende die Grenze des möglichen Federhubs erreicht wird.

Dementsprechend lang ist auch die Federstange, was zu Problemen bei der Montage in der gekrümmten Achse führt.

Ausgehend hiervon ist es Aufgabe der Erfindung ein Fensterrollo zu schaffen, das einfacher zu montieren ist.

Diese Aufgabe wird erfindungsgemäß durch ein Fensterrollo für Kraftfahrzeuge gelöst, das die Merkmale des Anspruches 1 aufweist.

Bei dem neuen Fensterrollo ist eine einends starr verankerte gekrümmte Achse vorhanden. Die Achse ist, zumindest an einem Ende, rohrförmig. Auf dieser Achse ist die Wickelwelle drehbar gelagert, die sich wenigstens aus einem Wellenabschnitt und einer Kappe zusammensetzt. Die Kappe ist gleichzeitig Teil der Lagereinrichtung der Achse und Widerlager für die Feder. Die Kappe sitzt drehbar auf entsprechenden Langermitteln und fesselt so das freie Ende der Achse in radialer Richtung.

Das ortsfeste Federwiderlager sitzt in der zumindest abschnittsweise rohrförmigen Wickelwelle. Hierdurch wird die Achse selbst zu dem ortsfesten Widerlager für den Federmotor. Die beim Stand der Technik vorhandene Federstange kann eingespart werden. Da die Feder, die den Federmotor bildet, flexibel ist, kann sie sich beliebig an die Krümmung der Achse anpassen. Insbesondere kann sich sie auf der Innenseite der Krümmung an der Achse anlegen, was zur Verminderung von Klappergeräuschen beiträgt. Zwangslagen zwischen Feder und Achse sowie Federstange, wie dies beim Stand der Technik der Fall ist, werden vermieden.

Die axiale Vorspannung, die der Federmotor erzeugen kann, wird gleichzeitig dazu benutzt die rohrförmige Wickelwelle samt Kappe in Achsrichtung vorzuspannen. Die einzelnen Wellenabschnitte liegen spielfei aneinander.

Auf einer Seite der starren Achse ist vorteilhafterweise ein Widerlager vorhanden, gegen das der benachbarte Wellenabschnitt aufgrund der Vorspannkraft der Feder angedrückt wird. Eine axiale Verriegelung der Wellenabschnitte gegeneinander wird auf diese Weise überflüssig.

Das Widerlager kann im einfachsten Falle durch einen Flansch gebildet sein, der durch Stauchen der rohrförmigen Achse erzeugt ist.

Um die rohrförmige Achse ortsfest zu verankern, ist sie zweckmäßigerweise an dem betreffenden Ende flach gedrückt, wodurch eine Befestigungslasche entsteht.

Die Kappe, die dazu verwendet wird, um die Kraft von dem Federmotor auf die Wellenabschnitte zu übertragen, kann entweder die Gestalt einer flachen Scheibe mit einer entsprechenden Mitnehmerverzahnung für die Wellenabschnitte haben, oder aber eine Kappe mit einem Boden und einem angeformten Kragen sein, mit dem sie selbst auf der Außenumfangsfläche der Achse gelagert ist.

Die Kappe ist auf ihrer der starren Achse benachbarten Seite mit einem Federwiderlager versehen, in dem die als Federmotor dienende Schraubenfeder drehfest und axial gesichert verankert ist.

Das ortsfeste Federwiderlager besteht aus einem Einsatzstück, das in der starren Achse eingesetzt und dort, beispielsweise durch Sicken verpresst ist.

Im Übrigen sind Weiterbildungen der Erfindung Gegenstand von Unteransprüchen.

Das geoffenbarte Ausführungsbeispiel kann in vielfältigerweise abgewandelt werden, wie dies der Fachmann sofort erkennt.

In der Zeichnung ist ein Ausführungsbeispiel des Gegenstandes der Erfindung dargestellt. Es zeigen:
- Fig. 1: eine teilweise aufgebrochene Heckpartie eines Kraftfahrzeuges, in einer perspektivischen Darstellung mit Blick gegen die Innenseite der Heckscheibe,
- Fig. 2: den prinzipiellen Aufbau des Heckscheibenrollos nach Fig. 1,
- Fig. 3: einen Längsschnitt durch ein Ende der Wickelwelle und der Tragachse des Heckscheibenrollos nach Fig. 2 und
- Fig. 4: einen Schnitt ähnlich dem nach Fig. 3 durch das andere Ende der Wickelwelle.

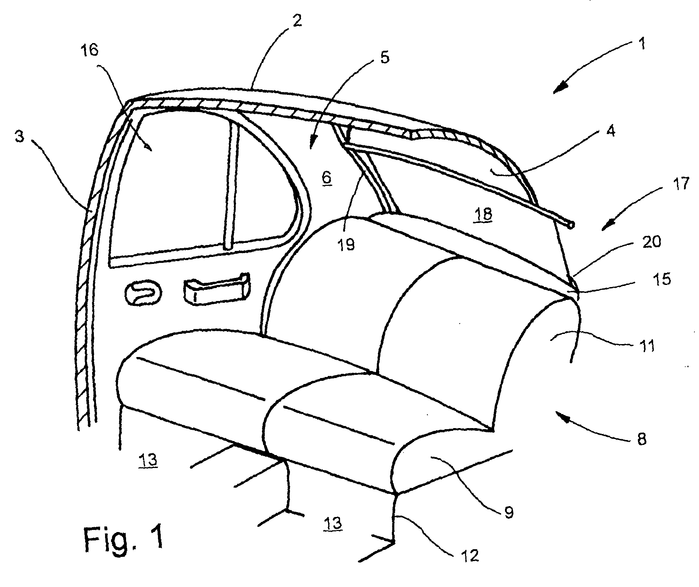

Fig. 1 stellt den aufgebrochenen, abgeschnittenen Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht. So sind beispielsweise Karosserieinnenstrukturen, wie Versteifung und Befestigungsmittel nicht gezeigt, da ihre Darstellung für das Verständnis der Erfindung nicht erforderlich ist. Ebenso ist die Darstellung der Karosserie schematisiert und lässt die dort vorhandenen Hohlräume nicht erkennen.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster an einer C-Säule 5, die sich im Abstand zu der B-Säule 3 befindet. Die C-Säule 5 trägt eine Innenverkleidung 6.

Zwischen der B-Säule 3 und der C-Säule 6 ist an der B-Säule 3 eine hintere, rechte Seitentür 7 in bekannter Weise anscharniert.

Auf der Höhe der hinteren, rechten Seitentür 7 befindet sich eine Rücksatzbank 8, zu der eine Sitzfläche 9 sowie eine Rücksitzlehne 11 gehören. Die Rücksitzfläche 9 liegt auf einer Sockelfläche 12, die zu der Bodengruppe gehört und vor der Fußräume 13 ausgebildet sind.

Auf der Höhe der Oberkante der Rücksitzlehne 11 erstreckt sich eine Hutablage 15 zu der Unterkante der Heckscheibe 4.

Die hintere, rechte Seitentür ist in der für Limousinen üblichen Weise mit einem Seitenfenster 16 versehen.

Auf der Innenseite vor dem Heckfenster 4 befindet sich ein Heckscheibenrollo 16. Von dem Heckscheibenrollo 16 ist dessen teilweise ausgezogene Rollobahn 17 sowie eine der seitlichen Führungsschienen 18 zu erkennen. Die Führungsschiene 18 beginnt an der hinter der Rücksitzlehne 11 vorhandenen Hutablage 15 und verläuft neben der seitlichen Fensterkante. Außerdem enthält die Hutablage 15 einen durchgehendenden Auszugsschlitz 20, aus dem die Rollobahn 18 herausläuft. Der Auszugsschlitz 20 ist gekrümmt, um sich der Krümmung des Heckfensters 4 anzunähern.

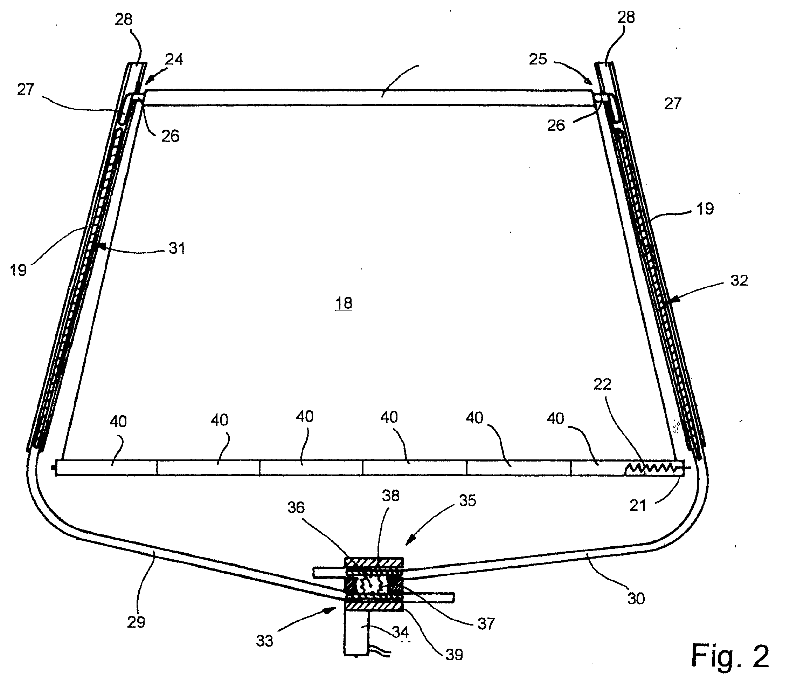

Der prinzipelle Aufbau des Heckscheibenrollos 16 ergibt sich aus Fig. 2.

Unterhalb der Hutablage 15 ist, wie sich aus Fig. 2 ergibt, eine gekrümmmte Wickelwelle 21 drehbar gelagert, an der mit einer Kante die Rollobahn 18 befestigt ist. Die Darstellung der Wickelwelle 21 ist in Fig. 2 stark schematisiert, die Einzelheiten ergeben sich aus den nachfolgenden Figuren.

Die Wickelwelle 21 ist mit Hilfe eines schematisch angedeuteten Federmotors 22 im Sinne des Aufwickelns der Rollobahn 18 auf die Wickelwelle 21 vorgespannt. Hierzu ist eine Schraubenfeder vorgesehen, die einends karosseriefest verankert und andernends in der Wickelwelle 21 festgelegt ist.

Die Krümmung der Wickelwelle 21 entspricht der Krümmung des Auszugschlitzes 20.

Die Rollobahn 17 weist einen etwa trapezförmigen Zuschnitt auf und ist an ihrer von der Wickelwelle 21 abliegenden Kante mit einer schlauchförmigen Schlaufe 23 versehen. Durch die schlauchförmige Schlaufe 23 führt ein Auszugsprofil oder Spriegel, in dem Endstücke 24 und 25 teleskopartig gelagert sind. Die Endstücke 24 und 25 weisen einen Halsteil 26 auf, der einen kleineren Durchmesser aufweist als ein sich daran anschließendes Führungsglied 27, das die Gestalt eines kurzen zylinderförmigen Abschnitts aufweist. Die Führungsglieder 27 laufen in den Führungsschienen 19, die neben den beiden Seitenkanten des Heckfensters 4 angeordnet sind.

Da sowohl die Wickelwelle 21 als auch das Auszugsprofil in gleicher Weise gekrümmt sind, beschreibt die ausgezogene Rollobahn 18 eine gekrümmte Fläche, deren Erzeugende eine Gerade ist. Die Rollobahn 18 streift möglichst nicht an den Rändern des Auszugschlitzes 18.

Jede der Führungsschienen 19 enthält eine hinterschnittene Führungsnut 28, die sich in Richtung auf die Rollobahn 18 in einem Führungsschlitz öffnet.

Das untere Ende jeder Führungsschiene 19 ist mit einem Führungsrohr 29, 30 verbunden, in denen ausknicksicher zwei biegsame Schubglieder 31 und 32 geführt sind. Die biegsamen Schubglieder 31 und 32 sind sogenannte SU-flexwellen. Sie bestehen aus einem zylinderförmigen Kern, der von einer schraubenförmig verlaufenden Rippe umgeben ist. Auf diese Weise wird eine Art flexibler Zahnstangen mit Rundumverzahnung erhalten.

Die Führungsrohre 29 und 30 verbinden die Führungsschienen 19 mit einem Getriebemotor 33. Der Getriebemotor 33 setzt sich aus einem permanent erregten Gleichstrommotor 34 und einem Getriebe 35 zusammen auf dessen Ausgangswelle 36 ein Stirnzahnrad 37 drehfest sitzt. Das Zahnrad 37 kämmt mit den beiden Schubgliedern 31, 32 formschlüssig. Die Schubglieder 31, 32 laufen tangential an die an diametral gegenüberliegenden Seiten an dem Stirnzahnrad 37 vorbei und sind hierzu in entsprechenden Bohrungen 38, 39 geführt.

Durch Ingangsetzen des Getriebemotors 33 werden die Schubglieder 31, 32 wahlweise vorgeschoben oder zurückgezogen. Der Bewegung der Schubglieder 31, 32 folgen die Führungsstücke 24, 25. Diese werden mit Hilfe des Federmotors 22 gegen die freien Enden der Schubglieder 31, 32 anliegend gehalten, die sich in den Führungsnuten 28 befinden.

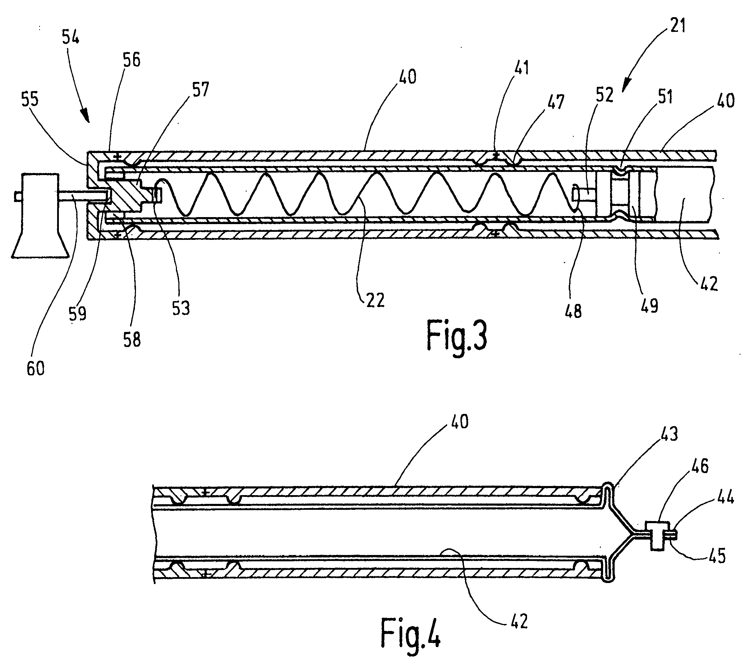

Der Aufbau der Wickelwelle wird nachstehend anhand der Figur 3 erläutert.

Die Wickelwelle 21 setzt sich, wie die vergrößerte Darstellung erkennen lässt, aus mehreren in axialer Richtung nebeneinander liegenden rohrförmigen Wellenabschnitten 40 zusammen. Die rohrfömigen Wellenabschnitte 40 sind an den Stoßstellen bei 41 formschlüssig miteinander gekuppelt. Um die formschlüssige Kupplung zwischen den benachbarten Wellenabschnitten 40 herzustellen, weisen die Wellenabschnitte stirnseitig Laschen auf, zwischen denen Ausnehmungen oder Aussparungen enthalten sind, die die gleiche Gestalt wie die Laschen haben, derart, dass die Laschen an einer Seite in die Ausnehmungen auf der gegenüberliegenden Seite des anderen Wellenabschnittes 40 eingreifen können. Gleichzeitig ist diese formschlüssige Verbindung die Möglichkeit geben, dass die einzelnen Wellenabschnitte 40 gegeneinander kippen können, um so den gewünschten gekrümmten Verlauf der Wickelwelle 21 polygonartig anzunähern.

Um der Wickelwelle 21 den gewünschten gekrümmten Verlauf aufzuprägen, sitzen die Wellenabschnitte 40 hintereinander auf einer rohrförmigen Achse 42. Die Achse 42 ist an einem Ende gemäß Fig. 4 in axialer Richtung gestaucht, wodurch ein radial nach außen stehender Flansch 43 entsteht, der als Widerlager für den unmittelbar benachbarten Wellenabschnitt 40 dient. Wie die Schnittdarstellung von Fig. 4 zeigt, ist das Wandmaterial, das die rohrförmige Achse 42 bildet im Bereich des Flansches 43 doppellagig.

Zur rechten Seite hin ist der verbleibende an den Flansch 43 sich anschließende rohrförmige Teil flach gedrückt, wodurch eine ebene Befestigungsplatte entsteht, mit einer Öffnung 45 für ein Befestigungselement 46, beispielsweise eine Schraube, ein Niet oder dergleichen. Die Befestigungsplatte 44 ist durch die Umformung einstückiger Bestandteil der rohrfömigen Achse 42.

Damit die rohrfömigen Abschnitte 40 auf der gekrümmten Achse 42 möglichst wenig Kippspiel haben, andererseits aber auch nicht klemmen, sind die rohrförmigen Wellenabschnitte 40 mit nach innen vorstehenden Warzen 47 versehen. Die Warzen 47 bilden jeweils Gruppen, wobei die Warzen innerhalb einer Gruppe auf einem zu der Achse des Wellenabschnitts 40 konzentrischen Kreis liegen. Jeweils eine Gruppe von diesen Warzen 47 ist in der Nähe des jeweiligen Stirnendes des Wellenabschnittes 40 vorgesehen, wie dies bei den vollständig gezeigten Wellenabschnitten 40 zu erkennen ist. Dadurch besteht die Möglichkeit, dass der rohrförmige Wellenabschnitt 40 im Bereich zwischen den Warzen 47 an den beiden Stirnenden hoch liegt und lediglich über die Warzen 47 mit der rohrförmigen Achse 42 in Berührung steht. Eine Krümmung der rohrförmigen Achse im Bereich zwischen den Enden der rohrförmigen Wellenabschnitte 40 führt nicht zum Klemmen.

Die genaue Gestaltung der einzelnen rohrförmigen Abschnitte 40 kann der DE 103 38 900 A1 entnommen werden, auf die hier ausdrücklich Bezug genommen ist.

Der schematisch angedeutete Federmotor 22 besteht aus einer Schraubenfeder. Die Schraubenfeder 22 ist mit ihrem Ende 48 in einem Widerlager 49 verankert, der in der rohrförmigen Achse 42 steckt. Er ist dort mit Hilfe einer Sicke 51 verpresst, so dass er sich weder in axialer Richtung bewegen kann noch drehen kann. Im Bereich der Sicke 51 ist das Federwiderlager 49 mit einer entsprechenden Einschnürung versehen. Das Federwiderlager 49 trägt in Richtung auf die Feder 22 einen kurzen Zapfen 52 mit Querloch, in dem das Federende 48 eingehängt ist.

Das andere Federende 53 ist mit einer becherförmigen Kappe 54 gekuppelt. Die becherförmige Kappe 54 setzt sich aus einem Boden 55 und einem daran anschließenden kurzen Kragen 56 zusammen. Der Kragen 56 ist an seinem freien Stirnende mit derselben Kupplungsverzahnung versehen, wie der benachbarte Wellenabschnitt 40, damit eine formschlüssige Kupplung zwischen der becherförmigen Kappe 54 und dem benachbarten Wellenabschnitt 40 besteht.

Der Boden 55 trägt auf seiner der rohrförmigen Achse 42 benachbarten Seite eine zapfenförmige Verlängerung 57, in die das Federende 53 eingehängt ist.

Auf der zapfenförmigen Verlängerung 57 sitzt noch eine Lagerbüchse 58, die dafür sorgt, dass die becherförmige Kappe 54 mit wenig Spiel drehbar in der rohrförmigen Achse 42 gelagert ist.

An der Außenseite ist der Boden 55 mit einer Sackbohrung 59 versehen, in die ein Lagerzapfen 60 hineinragt, der in der Karosserie fest verankert ist.

Aufgrund der Anordnung der Schraubenfeder 22 wird die Wickelwelle 21 im Sinne eines Aufwickelns der Rollobahn 18 vorgespannt. Um das Drehmoment zu erzeugen, stützt sich die Schraubenfeder 22 über das feststehende Federwiderlager 49 in der Karosserie über die dort fest gehalterte rohrförmigen Achse 52 ab. Das andere Ende der Schraubenfeder 22 ist drehfest über die becherförmige Kappe 54 mit dem benachbarten rohrförmigen Wellenabschnitt 40 gekuppelt, der wiederum spielfrei oder spielarm mit dem ihm benachbarten Wellenabschnitt 40 verbunden ist. Auf diese Weise wird das von der Schraubenfeder 22 erzeugte Drehmoment auf sämtliche Wellenabschnitte 40 übertragen.

Die Schraubenfeder 22 ist nicht nur im rotatorischen Sinne an dem Federwiderlager 49 und der becherförmigen Kappe 54 verankert, sondern auch in axialer Richtung festgelegt. Durch entsprechende Lage des Federwiderlagers 49 kann somit sichergestellt werden, dass die Schraubenfeder 22 nicht nur das Antriebsdrehmoment erzeugt, sondern auch eine Zugkraft auf die becherförmige Kappe 54 ausübt, um die Abfolge der rohrförmigen Wellenabschnitte 40 stirnseitig gegeneinander zu drücken. Die Reaktionskraft wird schließlich von dem Flansch 43 aufgenommen.

Da die Kappe über den Zapfen 57 und die Lagerbüchse 48 spielarm in der rohrförmigen Achse 42 gelagert ist und andererseits der ortsfeste Lagerzapfen 60 in die Sackbohrung 59 spielarm eingreift, ist auch das an sich frei auskragnede Ende der rohrförmigen Achse 40, das nicht unmittelbar mit der Karosserie verschraubt ist, in radiale Richtung geführt. Sämtliche Radialkräfte, die von der Wickelwelle 21 auf die rohrförmige Achse 40 übertragen werden, werden an einem Ende über die Platte 44 unmittelbar und an dem anderen Ende vermittels der drehbar gelagerten becherförmigen Kappe 54 in die Karosserie eingeleitet.

Wie die Figuren erkennen lassen, führt durch die Schraubenfeder keine Stange oder dergleichen hindurch. Vielmehr kann die Schraubenfeder 22 ungehindert dem gekrümmten Verlauf der an sich gekrümmten rohrfömigen Achse 42,folgen. Diese Achse ist lediglich aus Gründen der Vereinfachung der Darstellung gestreckt gezeigt, folgt jedoch tatsächlich einem mehr oder weniger stark gekrümmten Verlauf. Durch die Krümmung der rohrförmigen Achse wird zwangsläufig sicher gestellt, dass sich die Schraubenfeder 22 an der Innenwand der rohrförmigen Achse 40 anliegt. Erschütterungen des Fahrzeugs können die Feder 22 nicht mehr zu Schwingungen anregen, die sie innerhalb der rohrförmigen Achse 42 klappern lassen könnten.

Bei einem Rollo mit gekrümmter Wickelwelle wird ein Federmotor verwendet, bei dem ein Federwiderlager innerhalb und an der Achse festgelegt ist, auf der die einzelnen Segmente der Wickelwelle drehbar gelagert sind. Dadurch wird eine Montageerleichterung geschaffen und die Feder wird in die Lage versetzt, sich an der Wand der Achse anzulegen, um Klappergeräusche zu vermeiden.

## Patentansprüche

1. Fensterrollo (17) für Kraftfahrzeuge,
mit einer starren Achse (42), die bogenförmig gekrümmt, lediglich einends undrehbar gehaltert und, zumindest an dem freien Ende, rohrförmig ist,
mit einer auf der Achse (42) drehbar gelagerten Rollowelle (21), die aus wenigstens einem rohrförmigen Wellenabschnitt (40), dessen Innendurchmesser größer als der Außendurchmesser der Achse (42) ist, und einer Kappe (54) zusammengesetzt ist,
mit ortsfesten Lagermitteln (60) für die Kappe (54), die dazu eingerichtet sind die Kappe (54) drehbar zu lagern, wodurch das andere Ende der starren Achse 42() abgestützt ist
mit Kupplungsmitteln (41), die dazu eingerichtet sind, den Wellenabschnitte (40) drehfest mit der Kappe (54) zu kuppeln,
mit einer Rollobahn (18), die mit einer Kante an der Rollowelle (21) befestigt ist und die eine von der Rollowelle (19) abliegende Kante (22) aufweist, und
mit einem Federmotor (22), der in der Achse (42) untergebracht ist, dessen verankertes Ende in der Achse (42) liegt und dort festgesetzt ist und dessen anderes Ende mit der Kappe (54) drehfest verbunden ist.

2. Fensterrollo nach Anspruch 1, **dadurch gekennzeichnet, dass** die starre Achse (42) durchgehend rohrförmig ist.

3. Fensterrollo nach Anspruch 1, **dadurch gekennzeichnet, dass** auf der Achse (42) an einem Ende ein Widerlager (43) angeordnet ist, das die in axialer Richtung wirkenden Kräfte, die von der Rollowelle (21) ausgehen, aufnimmt.

4. Fensterrollo nach Anspruch 3, **dadurch gekennzeichnet, dass** das Widerlager (43) von einem radial sich erstreckenden Flansch gebildet ist, der durch axiales Stauchen der starren Achse (42) in axialer Richtung erzeugt ist.

5. Fensterrollo nach Anspruch 1, **dadurch gekennzeichnet, dass** die starre Achse (42) an dem undrehbar gehalterten Ende unter Ausbildung eines in axialer Richtung sich erstreckenden plattenförmigen Flansches (44) flach gedrückt ist.

6. Fensterrollo nach Anspruch 1, **dadurch gekennzeichnet, dass** die Kappe (54) einen Boden (55) mit einem davon ausgehenden rohrförmigen Kragen (56) aufweist.

7. Fensterrollo nach Anspruch 6, **dadurch gekennzeichnet, dass** die Kappe (54) über den Kragen (56) drehfest mit dem benachbarten Wellenabschnitt (40) gekuppelt ist.

8. Fensterrollo nach Anspruch 1, **dadurch gekennzeichnet, dass** die Kappe (54) eine Lagerbohrung (59) oder einen Lagerzapfen aufweist, der mit den ortsfesten Lagermitteln (60) zusammenwirkt.

9. Fensterrollo nach Anspruch 1, **dadurch gekennzeichnet, dass** die Kappe (54) auf ihre der starren Achse (42) zugekehrten Seite ein Federwiderlager (57) aufweist, über das die den Federmotor (22) bildende Feder dreh- und zugfest mit der Kappe (54) verbunden ist.

10. Fensterrollo nach Anspruch 1, **dadurch gekennzeichnet, dass** das in der starren Achse (42) sitzende Federwiderlager (49) mit der starren Achse (42) über eine Sickenverbindung (51) verankert ist.
